# EUROPÄISCHE PATENTSCHRIFT

(11) **EP 0 515 818 B1**
(45) Veröffentlichungstag und Bekanntmachung des Hinweises auf die Patenterteilung: **09.11.1994**
(21) Anmeldenummer: 92106445.7
(22) Anmeldetag: 14.04.1992
(51) Int. Cl.: A01J 7/00, G01F 15/12, G01F 1/52

(54) **Milchflussmesser**
Milk flowmeter
Débitmètre pour lait

(30) Priorität: 28.05.1991 DE 4117475
(43) Veröffentlichungstag der Anmeldung: 02.12.1992
(73) Patentinhaber: BIO-MELKTECHNIK HOEFELMAYR & Co., CH-9052 Niederteufen (CH)
(72) Erfinder: Hoefelmayr, Tilman, Dr., CH-9052 Niederteufen (CH)
(74) Vertreter: Grünecker, Kinkeldey, Stockmair & Schwanhäusser Anwaltssozietät

(56) Entgegenhaltungen:
- EP-A- 0 057 267
- DE-A- 2 720 987
- DE-A- 3 345 744
- DE-A- 3 803 572
- DE-B- 1 757 520
- DE-C- 2 608 585
- DE-C- 3 208 197
- US-A- 4 185 586

## Beschreibung

Die Erfindung betrifft einen Milchflußmesser mit einer mit einer Milchzuführleitung in Verbindung stehenden Meßkammer, die über eine oder mehrere kalibrierte Milchabflußöffnungen und gegebenenfalls einen zusätzlichen Luftbypass mit einer an ihrem unteren Ende einen Milchsumpf bildenden Ablaufkammer im Verbindung steht, und mit einer mit dem Milchsumpf in Verbindung stehenden Milchabsaugleitung.

Die Erfindung bezieht sich insbesondere auf einen Milchflußmesser der vorstehend beschriebenen Art, der mit besonderen Einrichtung für die Reinigung versehen ist.

Bei der modernen Melktechnologie wird der von der Kuh kommende Milchstrom intermittierend abgemolken und mit Transportluft (ca. 8 Liter pro Minute freie Luft), sowie häufig mit größeren Mengen Leckluft versetzt. Der sich hierdurch im sogenannten langen Milchschlauch ergebende pulsierende Zweiphasenstrom muß im Milchflußmesser wieder in seine beiden Bestandteile Milch und Luft getrennt sowie die kinetische Energie dieses Milchstromes abgebaut werden. In der eigentlichen Meßkammer darf die möglichst weitgehend entgaste Milch ausschließlich entsprechend der Gravitation durch die kalibrierte Meßöffnung fließen. Die abgetrennte Luft muß also über einen internen und/oder externen Bypass an der Meßstrecke vorbeigeführt werden, ohne auf das Auslaufverhalten der zu messenden Milch einen Einfluß nehmen zu können.

Weiterhin muß die insbesondere pulsationsbedingte zyklische Strömungsfluktuation möglichst gut geglättet werden, bevor die Milch die eigentliche Meßstrecke des Milchflußmessers durchfließt. Der möglichst weitgehende Abbau von Turbulenzen ist zur Beseitigung starker Oberflächenwelligkeit, sowie zur Minimierung von Schaumbildung erforderlich. Oberflächenwelligkeit und Milchschaum verursachen erhebliche Meßschwierigkeiten und beeinträchtigen das Signal des Sensors.

Zur Beruhigung und Entlüftung des Milchstromes werden verschiedenartige Mittel oft in Kombination eingesetzt, wie etwa der tangentiale Einlauf der Milch in einen Eingangsdom, ein Eingangszyklon, eine Umlenkschirmkonstruktion, eine Vorkammer, die die Meßkammer gegebenenfalls von unten speist, ein interner und/oder externer Luftbypass usw. Der interne Luftbypass verbindet Meßkammer und Ablaufkammer und ist etwa am höchsten Punkte der Meßkammer angeordnet. Die Luft streicht in diesem Fall in der Meßkammer direkt über die zu messende beruhigte und entgaste Milch hinweg. Der Bypass muß so groß dimensioniert sein, daß bei der Messung gleicher Druck zwischen der Meßkammer und der Ablaufkammer herrscht. Ein externer Bypass ist dann gegeben, wenn die Luft nach ihrer Abspaltung etwa in einem Zyklon separat aus diesem herausgeführt und erst hinter der Meßstrecke in die Ablaufkammer oder in den Absaugsumpf wieder zugegeben wird. Bei dieser Konfiguration herrscht in der Meßkammer praktisch keine Luftbewegung, was die Messung begunstigt. Die Art, Konstruktion und Dimensionierung dieser Einrichtungen beeinflußen jedoch nicht nur die Funktion des Milchflußmessers, sondern auch direkt die Schwankungen und/oder Verluste des an der Zitze wirksamen Melkvakuums. Dieses darf aber aus meltechnischen und vor allem eutergesundheitlichen Gründen durch die Zwischenschaltung etwa eines Milchflußmessers praktisch nicht beeinflußt werden.

Im Verlauf der Melkung ergibt sich ein für die Kuh charakteristisches Milchflußprofil, das sich etwa zwischen 0,2 und typischerweise 4 kg/min bewegt. Da allerdings - in seltenen Fällen - Milchflüsse bis 12 kg/min vorkommen können, muß die Durchsatzleistung moderner Milchflußmesser auf diesen Maximalwert ausgelegt werden. Das typische Bild eines gut konstruierten Milchflußmessers sieht so aus, daß die Milch relativ ruhig in der Meßkammer liegt und sich in der Regel auf weniger als die Hälfte der Meßkammerhöhe anstaut. Über der Milch liegt eine mehr oder weniger dichte Schaumkrone, die häufig bis an die Decke der Meßkammer reicht.

Die Ausbildung einer derartigen Schaumkrone läßt sich - zumindest bei kleineren Milchflußmessern und bei kuhwarmer Milch - praktisch nie ganz vermeiden, ebenso wie etwa ein Milchspray. Damit wird im Betrieb praktisch die ganze Meßkammer mit Milchbestandteilen beaufschlagt, die dann an dieser haften bleiben und sich allmählich zu einem hygienisch untragbaren Eiweiß- und Fettbelag verdichten würden, wenn sie nicht nach jedem Melken sicher durch eine entsprechende Reinigungs- und Desinfektionsflüssigkeit erreicht und beseitigt würden.

Für die einwandfreie tägliche Reinigung und Desinfektion einer normgerecht ausgelegten Melkanlage wird im Zirkulationsreinigungsprozeß ein Durchfluß von ca. 2 l/min Spülflüssigkeit eingesetzt, verbunden mit einem hohen, fluktuierenden Luftanteil (ca. 40 bis 150 l/min). Da das Spülfluid im zwischengeschalteten Milchflußmesser auch beruhigt wird, liegt die Spülflüssigkeit, wie davor die zu messende Milch, weitgehend ruhig und ohne Turbulenzen in der Meßkammer und staut sich zudem auf weniger als ein Drittel der maximalen Stauhöhe an. Damit werden die oberen zwei Drittel der Meßkammer und die Meßkammerdecke praktisch nicht gereinigt, was aus hygienischen Gründen indiskutabel ist. Dazu kommt, daß auch die oberen Partien des Meßsensors nicht gereinigt werden, weshalb das normale Reinigungsverfahren auch aus funktionalen Gründen nicht eingesetzt werden kann.

Generell läßt sich sagen, daß ein Milchflußmesser umso größere Schwierigkeiten bei der Reinigung bietet, je besser er arbeitet und je geringer seine Einflüsse auf das Melkvakuum sind. Zum Messen in einem Milchflußmesser sollen Milch und Luft möglichst perfekt getrennt und alle Turbulenzen abgebaut werden. Fur die Reinigung eines Milchflußmessers sind aber möglichst starke Turbulenzen eines intensiv mit Luft vermischten Spülfluids anzustreben. Erhöhungen der Temperatur und/oder der Spülmittelkonzentration und/oder der Reinigungszeit sind aus ökonomischen und/oder ökologischen Gründen nicht tragbar. Die mechanische Komponente (Benetzung plus Turbulenz) ist beim Reinigungsprozeß von Melkmaschinen der wichtigste Anteil und dies muß auch bei der Reinigung eines Milchflußmessers erreicht werden.

Hierzu wurden bereits verschiedene Lösungsansätze versucht. So wurde bereits etwa versucht, den Milchflußmesser beim Reinigungsprozeß durch Vermehrung der Spülflüssigkeitsmenge einfach zu fluten. Damit läßt sich prinzipiell ein sehr gutes Reinigungsergebnis erreichen. Da das Fluten (Überlaufen) aber erst bei einem Spülmitteldurchsatz oberhalb der maximalen Kapazität des Milchflußmessers (12 l/min) erfolgt, muß bei diesem Verfahren der Durchsatz im Vergleich zu dem für Melkanlange üblichen Reinigungsprozeß um mindestens den Faktor 6 vergrößert werden. Damit kann dieses Reinigungsverfahren jedoch besten Falls als Notmaßnahme gelten, denn es belastet Ökonomie und Ökologie ungebührlich stark durch erhöhten Chemikalien-, Energie- und Wasserverbrauch. Außerdem können derart hohe Durchsätze in der Praxis häufig gar nicht erreicht werden, wenn nämlich die Dimensionierungen von anderen Melkanlagenkomponenten Engpässe darstellen.

Ein weiterer Lösungsversuch ist das sogenannte Rückwärtsspülen, d.h. das Vertauschen von Zulauf- und Ablaufschlauch während des Zirkulationsreinigungsprozesses. Dieses Verfahren ergibt eine gute Turbulenz im gesamten Milchlfußmesser und damit ein durchaus befriedigendes Reinigungsergebnis. Es besteht jedoch das Problem, daß am Ende des Reinigungslaufes der durch Zeitsteuerung gesteuert wird, - da der Melker zu diesem Zeitpunkt bereits meist nach Hause gegangen ist, - der Milchflußmesser aufgrund der vertauschten Anschlüsse jedes Mal mit Spülflüssigkeit gefüllt stehenbleibt. Dies ist aus hygienischen Gründen indiskutabel und in vielen milchspezialisierten Ländern sogar gesetzlich verboten. Ein vakuumabhängiges automatisches Drain-Ventil könnte in diesem Falle zur Schlußentleerung nicht erfolgreich eingesetzt werden, da ein solches Ventil auch auf kurzfristige Vakuumabfälle beim Melken (Melkzeugabfall, Melkzeugabnahme) reagieren würde, und damit ein sporadisches Auslaufen von Milch aus dem Milchflußmesser beim Melkprozeß mit sich bringen würde. Außerdem ist das tägliche viermalige Umstecken des Zufuhr-, Abfuhrschlauches pro Milchflußmesser zumindest bei größeren Betrieben arbeitswirtschaftlich nicht trragbar. Die Konstruktion eines enstprechenden luftdichten Doppelhahnes ist wegen der relativ großen lichten Weite (Innendurchmesser 16 mm) sowie wegen der melktechnisch geforderten Schlauchstutzenausrichtung aufwendig, großvolumig und ebenfalls schwer zu handhaben. Ein weiteres Problem bei einem solchen Hahn wäre dessen innere Reinigung wegen des auftretenden Schmierfilms.

Als weitere Möglichkeit wurde auch schon versucht, den gesamten Milchflußmesser einfach auf den Kopf zu stellen. Auch dabei bekommt man prinzipiell einen sehr guten Reinigungseffekt im ganzen Innenraum. Allerdings ergibt sich hier dasselbe Problem wie bei der obengenannten Rückwärtsspülung: Der Milchflußmesser entleert sich in der Kopflage am Ende des Reinigungszyklus nicht automatisch von der Spülflüssigkeit. Zudem ist diese Art der Reinigung im praktischen Alltagseinsatz aus arbeitsweitschaftlichen und ergonomischen Gründen kaum durchführbar, weil die an das Melkzeug gekoppelte Zu- und Ablaufschläuche aufgrund der Umkehrung des ganzen Milchflußmessers die ausgeprägte Tendenz aufweisen, sich zu verdrehen, abzuknicken und sich miteinander zu verschlingen.

Vorrichtungen zum Reinigen und Desinfizieren der Milchwege von Rohrmelkanlagen sind bereits allgemein bekannt geworden aus der DE-PS 26 08 585, DES 27 20 987 und DE-OS 33 45 744.

Aus der DE-AS 17 57 520 und DE-PS 32 08 197 sind auch bereits Vorrichtungen zum Reinigen einer Milchschleuse in einer Melkanlage bekannt geworden. Bei einer solchen Milchschleuse fließt normalerweise während des Melkvorganges die Milch aus der Milchzuführleitung über einen Vorlaufbehälter von unten in die Milchschleuse ein. Die Milchschleuse wird üblicherweise lediglich bis zu einem Teil gefüllt, bevor die Milch sodann mit normalem Druck ausgeschleust wird. Für die Reinigung auch der oberen Teils der Milchschleuse mit Spülflüssigkeit ist deshalb für den Spülvorgang eine von der normalen Milchzuführleitung zu dem oberen Ende der Milchschleuse führende Zweigleitung mit einem während des Spülvorgangs öffnenbaren Ventil vorgesehen. Die Anwendung einer solchen zusätzlichen Leitung, die während des Spülvorgangs das anstelle der Milch durch den Milchflußmesser geleitete Spülmittel in die Bereiche bringen soll, die normalerweise nicht mit Milch gefüllt werden, hat sich jedoch ohne Veränderung der wesentlichen Funktionen des Milchflußmessers nicht als gangbar erwiesen.

Der vorliegenden Erfindung liegt deshalb die Aufgabe zugrunde, einen Milchflußmesser der eingangs erwähnten Art anzugeben, mit dem auch eine gründliche und einfache Reinigung des Milchflußmessers mit Hilfe von durchlaufender Spülflüssigkeit ermöglicht wird, ohne daß die normale Funktionsweise des Milchflußmessers beeinträchtigt wird.

Diese Aufgabe wird erfindungsgemäß bei einem Milchflußmesser der eingangs erwähnten Art gelöst durch eine mit ihrem einen Ende im wesentlichen in Höhe des oberen Endes der Meßkammer in die Ablaufkammer und/oder Meßkammer und mit ihrem anderen Ende in den Milchsumpf mündende Spülleitung, und durch eine die Milchabsaugleitung in einer Spülstellung im wesentlichen allein mit dem anderen Ende der Spülleitung verbindenden Verstelleinrichtung.

Hierdurch wird erreicht, daß während des Spülvorganges der Hauptteil der Spülflüssigkeit über den Oberteil der Meß- und Ablaufkammer und nur noch ein kleinerer Teil über die Ablaufkammer und den Milchsumpf abgesaugt wird. Aufgrund dieser Anordnung wird bewirkt, daß auch bei einem normalen Spülmitteldurchsatz von etwa 1 bis 3 l/min die Meß- und Ablaufkammer ganz mit Spülmittel, d.h. bis zur Decke, gefüllt werden. Es werden also im üblichen Reinigungsprozeß nicht erreichbare Partien des Milchflußmessers von der Spülflüssigkeit sicher erreicht.

Durch dieses vollständige Füllen der Meß- und Ablaufkammer entsteht aber noch ein weiterer Effekt: Die Spülflüssigeit versperrt nämlich nunmehr gleichzeitig den (internen) Luftbypass. Der große Luftdurchsatz eines üblichen Reingigungsprozesses (ca. 40 bis 150 l/min freie Luft) kann nun nur noch durch die bis zur Decke angestaute Spülflüssigkeit hindurchtreten, was zu einem kräftigen Brodeln in den Kammern führt. Da Spülflüssigkeit und die große Luftmenge gemeinsam über die obere Absaugöffnung der Spülleitung abgesaugt werden, entsteht zudem eine äußerst starke Oberflächenwelligkeit verbunden mit einer kräftigen Schüttelbewegung, durch die das Flüssigeitsniveau geändert wird. Insgesamt wird durch die neue Ausgestaltung des Milchflußmessers beim Spülvorgang eine bis dahin unerwartete hervorragende mechanische Reinigungswirkung erreicht.

Die Verstelleinrichtung umfaßt vorteilhafterweise Verstelleinrichtungen in Form von Ventilen, die die Milchabsaugleitung in einer Spülstellung im wesentlichen allein mit dem mit dem Milchsumpf in Verbindung stehenden Ende der Ablaufkammer verbinden. Mit "im wesentlichen allein" soll zum Ausdruck gebracht werden, daß in der Spülstellung zumindest der größte Teil der Spülflüssigkeit, etwa zwischen 60 bis 90%, über die Spülleitung fließt. Nach Möglichkeit sollte jedoch jeweils auch eine Verbindung mit erheblich geringerem Querschnitt als der Querschnitt der Spülleitung auch in der Spülstellung zwischen dem Milchsumpf und dem unteren Ende der Ablaufkammer einerseits und der Milchabsaugleitung andererseits bestehen bleiben.

Hierdurch wird erreicht, daß auch während des Spülvorganges ein kleinerer Teil der Spülflüssigkeit über die Ablaufkammer abgesaugt wird, so daß auch in der Ablaufkammer und im Sumpf noch genügend Turbulenzen vorhanden bleiben, um für eine ausreichende Reinigung dieser Teile zu sorgen, daß vor allem aber auch am Ende des Spülprozesses der Milchflußmesser automatisch von der gesamten Spulflüssigkeit entleert wird, indem über diese Verbindungen mit geringerem Querschnitt die Spülflüssigkeit am Ende des Spülvorganges aus dem Milchsumpf abgesaugt wird.

Eine solche Verbindung zwischen dem unteren Ende der Ablaufkammer, d.h. dem Milchsumpf und der Absaugleitung in der Spülstellung kann derart ausgestaltet sein, daß sie auch während des üblichen Melkprozesses geöffnet ist, sie kann aber auch so ausgestaltet sein, daß sie etwa durch die Verstellung der Verstelleinrichtung in die Spülstellugn erst geöffnet wird. Insbesondere können etwa derartige Verbindungsöffnungen auch in den Ventilen selbst vorgesehen sein.

Gemäß einer besonderen Ausgestaltung der Erfindung werden die Ablaufkammer, der Milchsumpf und die Absaugleitung in der Höhe übereinander angeordnet, die Spülleitung in Form eines an seinen Enden offenen und in der Höhe verstellbaren Rohres ausgebildet, und das Rohr an seinem unteren Ende mit einem Dichtungskranz versehen, der in der abgesenkten Spülstellung des Rohres dichtend auf einem um die Absaugleitung herum ausgebildeten Ventilsitz aufsitzt. Diese Ausgestaltung ermöglicht eine besonders kompakte Bauform.

Bei dieser Anordnung können etwa in dem Dichtungskranz Durchlässe ausgebildet sein, die in der Spülstellung die Ablaufkammer über den Milchsumpf mit der Absaugleitung verbinden.

Gemäß einer weiteren vorzugsweisen Ausgestaltung der Erfindung wird die Anordnung derart getroffen, daß die Milchzuführleitung über einen Zyklon und eine durch das untere Ende eines Trennschotts begrenzte Öffnung mit der Meßkammer in Verbindung steht, daß der Zyklon über einen weiteren Luftbypass mit dem Milchsumpf in Verbindung steht, und daß das in den Milchsumpf reichende Ende des weiteren Bypasses um eine vorbestimmte Höhendifferenz niedriger liegt als der höchstliegende Teil des unteren Endes der Trennschotts. Bei einer ausreichend groß gewählten Höhendifferenz wird erreicht, daß der weitere Luftbypass praktisch als geschlossen anzusehen ist, und daß die vor dem Trennschott angestaute Spülslüssigkeit zusammen mit der in den Zyklon eingeströmten und hierin abgespalteten Luft unter dem Trennschott hindurchtreten muß. Dies wirkt sich derart aus, daß die Luft regelrecht von unten nach oben in die mit Spülflüssigkeit vollgefüllte Meß- und Ablaufkammer hinein explodiert. Da? die Luft tatsächlich auch bei einer derartigen Ausgestaltung im wesentlichen nicht über den weiteren, externen Luftbypass geht, kann wie gesagt dadurch erreicht werden, daß die genannte Höhendifferenz ausreichend groß gemacht wird. Liegt etwa das untere Ende des weiteren, externen Luftbypasses, um ca. 5 cm niedriger als das untere Ende des Trennschotts, so ergibt sich für die beiden konkurrierenden Transportwege für die Spülflüssigkeit eine Druckdifferenz von ca. 5 cm Wassersäule- Mit diesem Druck wird quasi der Luftbypass verschlossen.

Sollte jedoch in einem Ausnahmefall der nötige hydraulische Luftbypassverschließdruck aus kontruktiven Gründne nicht ohne weiteres erreicht werden können, so kann der Durchgang des weiteren, externen Luftbypasses hilfsweise auch mit einfachen mechanischen Mitteln, etwa mit einer zusätzlichen Verschlußkappe oder etwa einer pneumatich betätigaren Drossel, die auch ganz geschlossen werden kann, verschlossen werden. Hierfür könnte etwa ein einfacher, pneumatisch betätigbarer Absperrstrumpf oder auch eine einfache Membrankonstruktion vorgesehen werden.

Im folgenden soll die Erfindung anhand von in der Zeichnung dargestellten vorzugsweise Ausführungsformen erläutert werden. In der Zeichnung zeigen:
- Fig.1: einen schematischen Längsschnitt durch eine gemäß der Erfindung ausgebildete Ausführungsform eines Milchflußmessers.
- Fig.2: einen ähnlichen Längsschnitt wie in Fig. 1 durch eine weitere Ausführungsform der Erfindung.
- Fig.3: einen Schnitt entlang der Linie III-III durch die in Fig. 2 gezeigte Ausführungsform.
- Fig.4: einen Teilausschnitt der in Fig. 2 gezeigten Ausführungsform in dem eine weitere Abwandlung der in Fig. 2 gezeigten Ausführungsform dargestellt ist.
- Fig.5: einen schematischen Längsquerschitt durch eine weitere erfindungsgemäße Ausführungsform,
- Fig.6: einen schematischen Längsschnitt durch eine weitere Ausführungsform ähnlich der in Fig. 5 gezeigten Ausführungsform, und
- Fig. 7: einen Längsschnitt durch eine weitere erfindungsgemäße Ausführungsform.

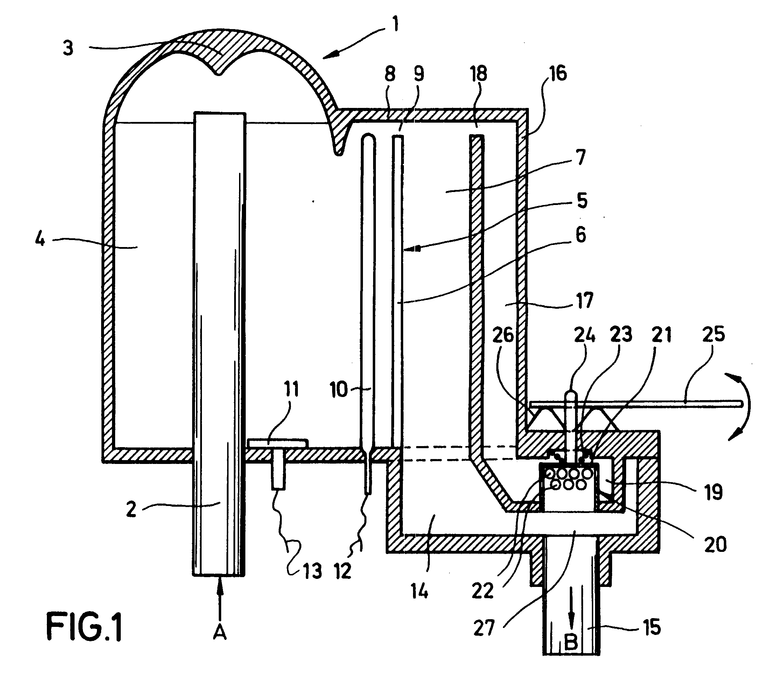

In Fig. 1 ist der Milchflußmesser allgemein mit 1 bezeichnet. Über die Milchzuführleitung 2 wird die ankommende Milch in Richtung des Pfeiles A aufwärts gegen den Dom 3 einer Meßkammer 4 gefördert und an diesem Dom nach abwärts in die Meßkammer 4 umgelenkt. Die Meßkammer 4 ist über eine Trennwand 5, in der über die gesamte Höhe ein kalibrierter Schlitz 6 ausgebildet ist, von der Milchablaufkammer 7 getrennt. Zwischen dem oberen Ende der Trennwand 5 und dem unteren Ende der Decke 8, die einen Teil der Meßkammer und die Ablaufkammer 7 nach oben begrenzt, ist ein innerer Luftbypass 9 ausgebildet. Vor dem Schlitz 6 steht innerhalb der Meßkammer eine stabförmig ausgebildete Elektrode 10 und am Boden der Meßkammer ist eine Gegenelektrode 11 vorgesehen. Beide Elektroden sind über elektrische Zuleitungen 12, 13 mit nicht gezeigten Meßgeräten verbunden. Die Ablaufkammer 7 steht an ihrem unteren Ende mit einem Sumpf 14 in Verbindung das tiefste Niveau des Submpfs ist mit einer Absaugleitung 15 verbunden, über die die Milch in Richtung des Pfeiles B nach abwärts abgesaugt wird.

Innerhalb des Milchflußgehäuses 16 ist zusätzlich eine Spülleitung 17 vorgesehen, die an ihrem oberen Ende 18 unterhalb der Decke 8 in die Ablaufkammer 7 mündet. In dem unteren Ende 19 der Spülleitung ist ein zylinderförmiges Ventil in seiner Längsachse fluchtend mit der darunterliegenden Absaugleitung 15 angeordnet. Das zylinderförmige Ventil 20 ist nach oben durch eine Platte 21 verschlossen während es auf seiner Unterseite offen ist. Unterhalb der oberen Verschlußplatte 21 sind auf dem Umfang des zylindrischen Ventils Öffnungen 22 ausgebildet. Das Ventil ist durch eine Feder 23 nach abwärts in eine Spülstellung vorgespannt. Die obere Platte 23 ist über einen Haltebolzen mit einem quer hierzu verlaufenden und hieran befestigten Betätigungshebel 25 verbunden, der gegen eine Kurvenführung 26 anliegt. Der Betätigungshebel 25 liegt in der dargestellten Stellung gegen die Kurvenführung 26 derart an, daß das Ventil 20 sich in seiner angehobenen Stellung befindet, in der das untere Ende der Ablaufkammer 7 über den Sumpf 14 unmittelbar mit der Absaugleitung 15 verbunden ist, während gleichzeitig aber auch die Absaugleitung 15 über die Öffnungen 22 in dem Ventil 20 mit der Spülleitung 17 in Verbindung steht. Bei einer Drehung des Betätigungshebel 25 um 90^{o} gelangt das Ventil aufgrund der Federkraft der Feder 23 in eine abgesenkte Stellung, in der der Rand des Ventils sich dichtend um die Eintrittsöffnung 27 der Absaugleitung 15 in den Milchsumpf 14 legt. In dieser Stellung ist die Absaugleitung 15 im wesentlichen nur über die Öffnungen 22 in dem Ventil mit der Spülleitung 17 verbunden. Wenigstens eine kleinere Öffnung in dem zylindrischen Mantel des Ventils 20 ist jedoch auch in einer solchen Höhe vorgesehen, daß über diese in der unteren Spülstellung des Ventils eine Verbindung zwischen dem Sumpf 14 und der Absaugleitung 15 hergestellt wird.

Die Funktion der Reinigungsvorrichtung ist wie folgt:
Während des normalen Gebrauchs des Milchflußmessers befindet sich das Ventil 20 in der in Fig. 1 gezeigten angehobenen Stellung. In dieser Stellung ist die Ablaufkamer 7 über dem Milchsumpf 14 maximal mit der Absaugleitung 15 verbunden. Zwar ist auch die Spülleitung 17 über das Ventil 20 und die Öffnungen 22 mit der Absaugleitung 15 verbunden, jedoch führt dies während des Milchflußmeßvorganges nicht zu einem Abtransport von Milch sondern lediglich dazu, daß höchstens eine gleichmäßige Druckverteilung in der Ablaufkammer 7 erzeugt wird. Die Milchflußmessung, auf die es im Rahmen der Erfindung nicht ankommt, erfolgt sodann derart, daß die Milch über die Milchzuführleitung 2 in die Meßkammer 4, von dort über den Schlitz 6 in die Ablaufkammer 7 fließt und von dort über den Milchsumpf 14 durch das Melkvakuum in der Absaugleitung 15 in diese abtransportiert wird.

Zur Reinigung des Milchflußmessers wird anstelle der Milch eine entsprechende Spülflüssigkeit mit entsprechender Einleitung von Luft durch den Milchflußmesser in derselben Weise wie bei dem Milchflußmeßvorgang geleitet. Hierzu wird jedoch zunächst das Ventil 20 in seine untere abgesenkte Stellung gebracht, wodurch die Verbindung zwischen der Ablaufkammer 7, dem Milchsumpf 14 und der Absaugleitung 15 weitgehend unterbrochen wird. Ein Abtransport der Spülflüssigkeit kann deshalb lediglich über das obere Ende 18 der Spülleitung, die Spülleitung 7 selbst, die Öffnungen 22 in dem Ventil 20 in die Absaugleitung 15 erfolgen. Hierdurch wird erreicht, daß sich die gesamte Meßkammer 4 mit Spülflüssigkeit füllt. Aufgrund der kleineren, nicht dargestellten Öffnung im Mantel des Ventils 20 wird dennoch auch am Ende des Spülvorganges erreicht, daß über diese Öffnung der gesamte Sumpf 14 von Spülflüssigkeit geleert wird, indem diese über die genannte Öffnung in das Innere des Ventils 20 und in die Absaugleitung 15 abgesaugt wird.

Zum Einsatz als Milchflußmesser braucht sodann lediglich nur das Ventil 20 wieder angehoben werden, indem der Betätigungshebel 25 um 90^{o} in die in Fig. 1 gezeigte Stellung zurückgedreht wird.

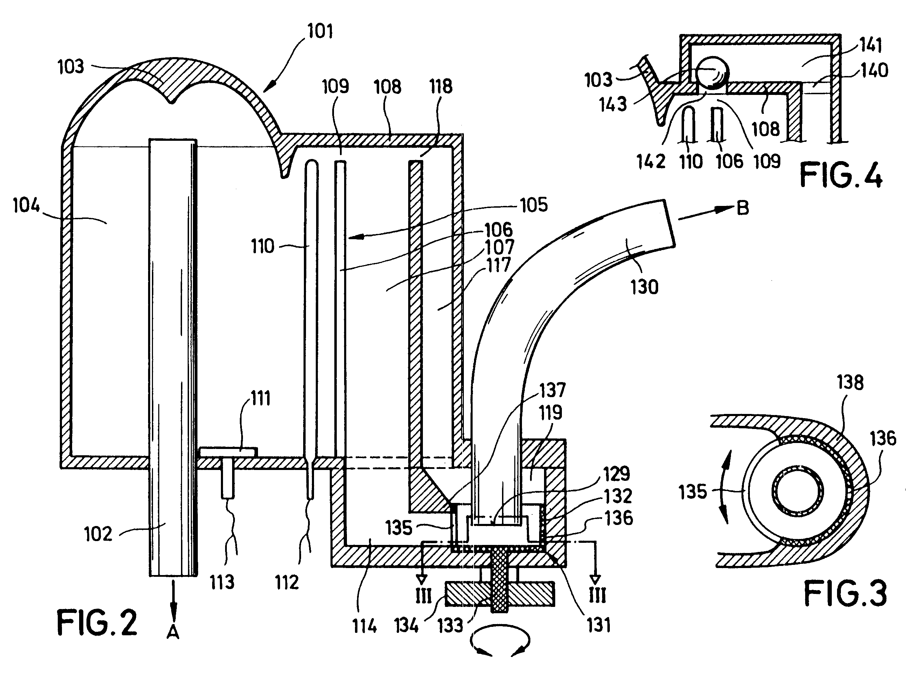

In den Fig. 2 und 3 ist eine ähnliche Ausführungsform wie in Fig. 1 dargestellt und gleiche Teile sind aus diesem Grunde mit den gleichen, lediglich um 100 erhöhten Bezugszeichen bezeichnet. Auf diese, bereits in Fig. 1 beschriebenen Teile soll deshalb nicht nochmals eingegangen werden.

In Fig. 2 wird die Milch über eine mit ihrem Ende 129 in den Milchsumpf 114 ragende Milchabsaugleitung 130 abgesaugt. Bei dieser Ausführungsform ist eine Verstelleinrichtung in Form eines Drehventils 131 vorgesehen. Das Drehventil 131 besteht im wesentlichen aus einem nach oben hin offenen zylindrischen Topf 132, der auf seiner Unterseite einen Haltebolzen 133 aufweist, auf dem auf der Außenseite des Milchflußmessers 101 eine Betätigungsrändelschraube 134 angebracht ist, durch die der zylindrische Topf um die senkrecht verlaufende Longitudinalachse des Haltebolzens 133 drehbar ist.

Wie am besten aus Fig. 3 zu ersehen ist, ist in der zylindrischen Mantelfläche des zylindrischen Topfes ein größeres Fenster 135 und demgegenüberliegend eine kleinere Öffnung 136 ausgebildet. Der obere Rand des Zylindertopfes 131 liegt über seinen ganzen Umfang dichtend gegen die Innenwand einer kreisförmigen Öffnung 137 an, die die untere Auslaßbegrenzung des unteren Endes 119 der Spülleitung 117 bildet.

Wie am besten aus Fig. 3 zu ersehen ist, liegt die Außenseite des Mantels des Zylindertopfes 131 über einen größeren Winkel als 180^{o} dichtend gegen die Innenseite des den Milchsumpf 114 begrenzenden Gehäuseteils 138 an.

In der in den Fig. 2 und 3 gezeigten Stellung des Ventils 131 ist die Absaugleitung 130 sowohl über das obere freie Ende des Zylindertopfes mit der Spülleitung 117 wie auch über die fensterförmige Öffnung 135 in dem Ventil 131 mit dem Milchsumpf 114 und mit der Ablaufkammer 107 verbunden. Wird die Betätigungsrändelschraube 134 um 180^{o} um die Längsachse des Ventils gedreht, so gelangt die fensterförmige Öffnung 135 in eine Lage, in der sie gegen die Innenseite des Gehäuses 138 dichtend anliegt, während lediglich die Öffnung 136 eine Verbindung zwischen der Innenseite des Zylindertopfes und dem Milchsumpf 114 herstellt. Diese letztere Stellung stellt die Spülstellung dar, in der praktisch die Absaugleitung 130 im wesentlichen nur mit der Spülleitung 117 verbunden ist und bei der lediglich über die kleinere Öffnung 136 eine Verbindung zwischen der Absaugleitung 130 und dem Milchsumpf 114 und hierüber mit der Ablaufkammer 107 besteht.

In Fig. 4 ist lediglich eine zusätzliche mögliche Abänderung zu der in Fig. 2 gezeigten Ausführungsform dargestellt, indem der bei der Ausführungsform der Fig. 2 vorgesehene Durchlaß 118 verschlossen und die Spülleitung an ihrem oberen Ende über einen Durchbruch 140 in der Decke 108 in den über der Decke liegenden Leitungsteil 141 weitergeführt ist. Der Leitungsteil 141 steht über eine zweite Öffnung 142 in der Decke 108, die im wesentlichen in den internen Luftbypass 109 mündet, mit der Meßkammer und der Ablaufkammer in Verbindung. Auf der Innenseite des äußeren Bypass 141 ist die Öffnung 142 normalerweise mit einem Kugelrückschlagventil verschlossen, so daß während des normalen Milchflußmeßbetriebes kein Schaum über diese Öffnung an dem Meßspalt 106 vorbei abfließen kann. Das Kugelrückschlagventil ist jedoch vorzugsweise nicht durch eine Feder vorgespannt, sondern lediglich als 45^{o}-Sitz-Ventil ausgebildet, bei dem die Schließkraft allein durch das Gewicht der Kugel gebildet wird. Die Schließkraft sollte lediglich so groß sein, daß sie den geringen Auftriebskräften des Schaumes entgegensteht. Als Kugel kann etwa eine Glaskugel verwandt werden. Würde das Rückschlagventil eine größere Zuhaltekraft besitzen, würde damit tendenziell der Spülflüssigkeitsdurchsatz sinken und die Reinigungsleistung abnehmen.

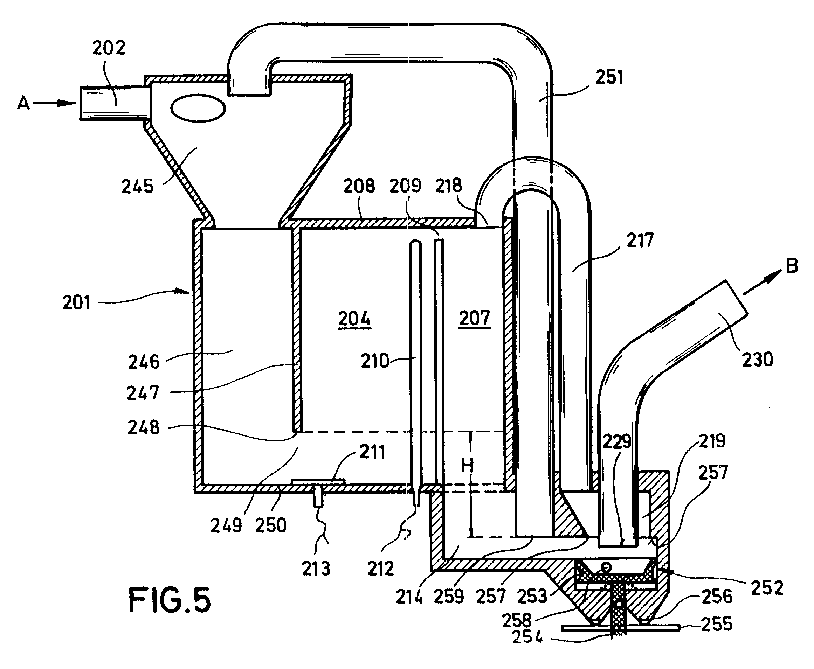

In Fig. 5 ist ein ähnlicher Milchflußmesser wie in den vorhergehenden Figuren dargestellt, weshalb gleiche Teile mit den gleichen, jedoch um 200 erhöhten Bezugszählen bezeichnet sind. Die Milchzuführleitung 202 mündet tangential in einen Zyklon 245, der an seinem unteren Ende mit einer darunterliegenden Vorkammer 246 in Verbindung steht. Die Vorkammer 246 ist von der Meßkammer 204 durch ein Trennschott 247 getrennt, das jedoch an seinem unteren Ende 248 eine Öffnung 249 zu dem Boden 250 freiläßt, über die die Milch von der Vorkammer in die Meßkammer 204 treten kann. Zwischen dem oberen Ende des Zyklons 245 und dem Milchsumpf 214 ist ein äußerer Luftbypass durch die Leitung 251 gebildet. Ferner ist bei dieser Ausführungsform die Spülleitung 217 in Form eines Rohres ausgebildet, das mit seinem oberen Ende 218 von oben in die Decke 208 oberhalb der Ablaufkammer 207 mündet.

Ferner ist eine Verstelleinrichtung in Form eines Tellerventils 252 vorgesehen. Das Tellerventil 252 weist einen nach aufwärts geöffneten tellerförmigen Dichtungsteil 253 auf, der an einem Haltebolzen 254 gehalten ist, an dem ein Betätigungshebel 255 befestigt ist. Der Betätigungshebel 255 liegt gegen eine Führungskurve 256 an. Das Tellerventil selbst ist in seiner Längsrichtung aufwärts gegen einen ringförmigen Ventilsitz 257 durch eine Feder 258 vorgespannt. In der ringförmigen Dichtlippe des tellerförmigen Dichtteiles 253 ist ein Durchlaß 258 ausgebildet.

Das in den Milchsumpf 214 hineinreichende Ende 259 des äußeren Luftbypasses 251 liegt um die Höhendifferenz H niedriger als die untere Kante 248 des Trennschotts 247.

Während des üblichen Milchflußmeßbetriebes befindet sich das Ventil 252 in der in Fig. 5 gezeigten Stellung, in der das untere Ende 229 der Absaugleitung 230 sowohl mit dem Sumpf 214 wie auch mit dem unteren Ende 219 der Spülleitung 217 in Verbindung steht. Für den Spülvorgang kann das Ventil 252 in eine Spülstellung gebracht werden, indem der Betätigungshebel 255 um 90^{o} um die Longitudinalachse des Ventils gedreht wird, wodurch das Ventil aufgrund der Feder 258 in eine Stellung angehoben wird, in der der obere Dichtungsrand dichtend gegen den Ventilsitz 257 anliegt. In dieser Stellung ist das untere Ende 229 der Absaugleitung 230 im wesentlichen lediglich über die Ausnehmung des Tellerventils mit der Spülleitung 217 verbunden. Lediglich über die Durchgangsöffnung 258 in der Dichtlippe des Ventils besteht noch eine Verbindung zwischen der Absaugleitung 230 und dem Milchsumpf 214. Aufgrund der Tatsache, daß das untere Ende 259 des externen Luftbypasses 252 um die Höhendifferenz H niedriger als die untere Kante 258 des Trennschotts 247 liegt, wird eine solche Druckdifferenz zwischen diesen Stellen erzeugt, daß die gesamte Spülflüssigkeit nebst der mitgeführten Luft ihren Weg über die Vorkammer unter dem Trennschott hindurch in die Meßkammer 204 nimmt, wo die Luft sich explosionsartig von unten nach oben gegen die Decke 208 bewegt, wodurch eine gründliche Reinigungswirkung erzielt wird. Das druckmäßige Verschließen des äußeren Luftbypasses 251 aufgrund der Höhendifferenz H kann noch begünstigt werden, wenn die Verhältnisse der Querschnitte des Luftbypasses 251 zu dem Querschnitt der Spülleitung 217 entsprechend gewählt wird, das heißt, daß der Querschnitt der Spülleitung 217 entsprechend größer als der der Bypassleitung 251 gewählt wird. Um jedoch im normalen Milchflußmesserbetrieb einen Vakuumabfall über der Bypassleitung 251 zu vermeiden, kann der Querschnitt dieser Bypassleitung 251 nicht beliebig klein gewählt werden.

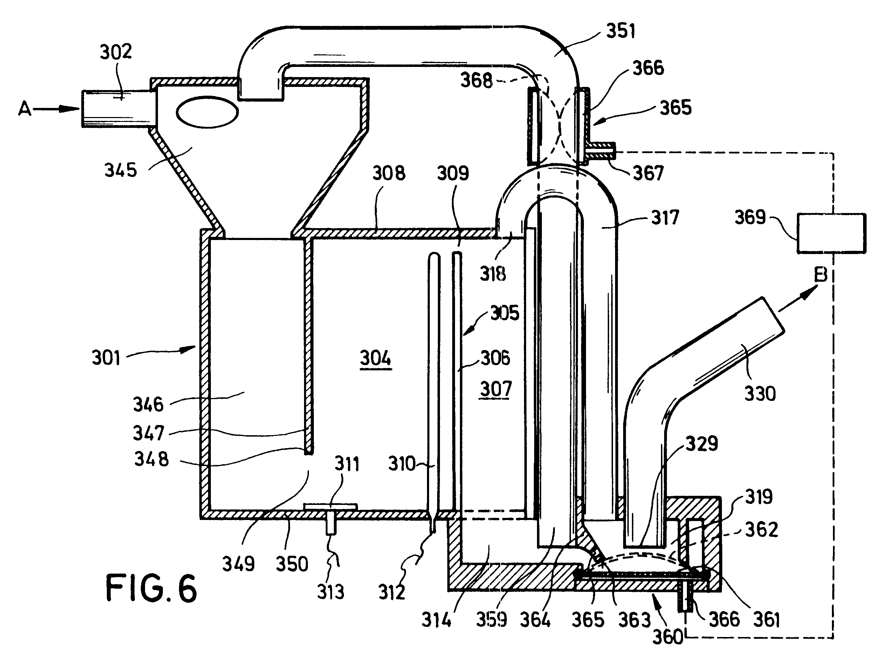

In Fig. 6 ist eine ähnliche Ausführungsform eines Milchflußmessers wie in Fig. 5 dargestellt, weshalb gleiche Teile mit den gleichen Bezugszeichen, jedoch mit dem Vorsatz 300 bezeichnet sind und weshalb auf diese Teile nicht nochmals näher eingegangen wird. Bei dieser Ausführungsform ist als Verstelleinrichtung ein Membranventil 360 vorgesehen, das in der Fig. 6 in seiner entspannten, nichtbetätigten Stellung dargestellt ist, in der die Absaugleitung 330 im wesentlichen mit dem Milchsumpf 314 und damit mit der Ablaufkammer 307 aber gleichzeitig auch mit dem unteren Ende 319 der Spülleitung 317 in Verbindung steht. Wird das Membranventil über eine Leitung 366 mit Druck beaufschlagt, so daß es die in gestrichelten Linien eingezeichnete Stellung, die der Spülstellung entspricht, einnimmt, so liegt die Membran dichtend gegen einen ringförmigen Ventilsitz 363 an, der durch das untere Ende 319 der Spülleitung 317 gebildet wird. In dieser Stellung gibt die Membran jedoch noch das untere Ende 329 der Absaugleitung 330 frei. In dieser Stellung der Membran wird somit die wesentliche Verbindung zwischen der Absaugleitung 330 und dem Milchsumpf 314 und damit der Ablaufkammer 307 versperrt. Lediglich eine in der den Ventilsitz 363 bildenden Wand 364 vorgesehene Durchgangsöffnung 365 stellt eine Verbindung zwischen der Absaugleitung 330 und dem Milchsumpf 314 her.

Ferner ist bei dieser Ausführungsform lediglich vorzugsweise in der externen Luftbypassleitung 351 eine verstellbare Drossel 365 vorgesehen, die aus einem zylindrischen Gehäuse besteht, in das eine eingespannte elastische zylinderförmige Membran (Strumpfschlauch) eingesetzt ist. Mit dieser Drossel kann eine Verengung des Querschnittes der externen Luftbypassleitung 351 erreicht werden, indem auf den Zwischenraum zwischen dem Gehäuse 365 und der zylinderförmigen Membran 366 über die Leitung 367 ein Überdruck gegeben wird, wodurch sich die Membran in etwa in die in der Figur in gestrichelten Linien 368 dargestellte Stellung bewegt. Bei einem entsprechenden Überdruck auf der Leitung 367 kann somit auch die gesamte Leitung 351 verschlossen werden, so daß die Drossel praktisch als ein Absperrventil dient. Eine solche Drossel 365 wird lediglich bei Bedarf verwandt. Da sowohl die Drossel 365 wie auch das Membranventil 360 beide pneumatisch betätigbar sind, kann eine gemeinsame Steuerung 369 vorgesehen werden, die die Drossel und das Membranventil für eine Spülstellung derart gleichzeitig steuert, daß ein Druck auf beide Vorrichtungen gegeben wird, so daß diese jeweils ihre in der Fig. 6 in gestrichelten Linien dargestellten Stellungen einnehmen. Für die normale Arbeitsweise des Milchflußmessers werden beide Vorrichtungen über die Vakuumsteuerungsschaltung 369 wieder in ihre Ruhestellung zurückgesteuert.

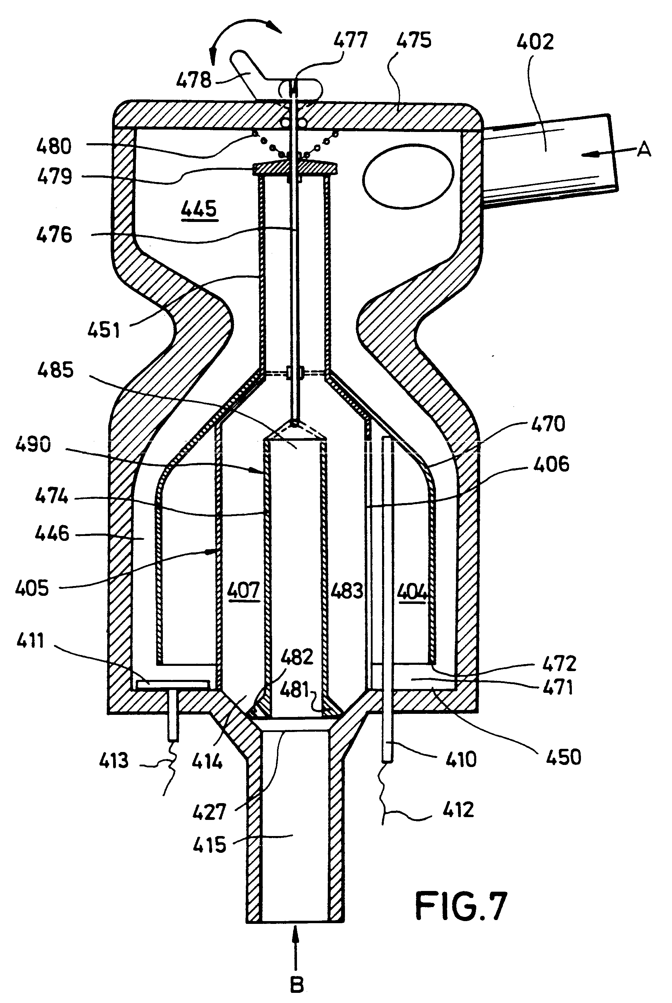

In der Fig. 7 ist eine weitere Ausführungsform eines Milchflußmessers ähnlich der in den Fig. 5 und 6 gezeigten Ausführungsform gezeigt, weshalb entsprechende Bauteile mit den gleichen Bezugszeichen jedoch mit dem Vorsatz 400 bezeichnet sind.

Bei dieser Ausführungsform ist der Zyklon 445 rotationssymmetrisch mit der Vorkammer 446 und einer das Trennschott bildenden Taucherglocke 470 ausgebildet, unter der die Meßkammer 404 vorgesehen ist. Die Vorkammer 446 ist über eine Öffnung 471 zwischen dem unteren Rand 472 der Taucherglocke und dem Boden 450 des Milchflußmessers mit der meßkammer verbunden. Die Meßkammer 404 selbst ist ringförmig gestaltet und umgibt eine zylinderförmige Trennwand 405, in der ein kalibrierter Meßschlitz 406 ausgebildet ist. Die zylindrische Trennwand 405 umgibt die Ablaufkammer 407, die an ihrem unteren Ende in den Milchsumpf 414 übergeht, der durch eine sich nach unten konische Verjüngung der Ablaufkammer 407 gebildet wird. Der Milchsumpf 414 geht an seinem unteren Ende unmittelbar in die Absaugleitung 415 über.

Die zylindrische Trennwand 405 verjüngt sich an ihrem oberen Ende nach aufwärts konisch und geht in eine mit ihrer Längsachse zentrisch zu der gesamten Vorrichtung angeordnete zylindrische Leitung 451 über, die einen unmittelbar mit der Ablaufkammer 407 in Verbindung stehenden Luftbypass bildet.

In der Ablaufkammer 407 ist ein die Spülleitung 474 bildendes Rohrstück angeordnet, das entlang der Mittellängsachse der Vorrichtung ausgerichtet ist und entlang dieser Achse in der Höhe verstellbar ist. Das obere Ende des Rohres 474 ist an einer in der Bypassleitung 451 und dem oberen Verschlußdeckel 475 des gesamten Milchflußmessergehäuses geführten Gestänges 476 gehaltert. Das Gestänge 476 kann mit Hilfe eines an dem oberen Ende des Gestänges im Punkt 477 angelenkten Kipphebels 478 durch Verschwenken des Kipphebels um seine Anlenkachse angehoben beziehungsweise abgesenkt werden. An dem Gestänge 476 ist ferner eine Abdeckhaube 479 befestigt, die in der in der Fig. 7 dargestellten Spülstellung das obere Ende des Rohres 451 der Bypassleitung verschließt. Das Gestänge 476 ist durch die Feder 480 nach abwärts gegen die in der Fig. 7 dargestellte Stellung vorgespannt und kann mit Hilfe der Verschwenkung des Hebels 478 aus dieser Stellung angehoben werden.

Das untere Ende des die Spülleitung bildenden Rohres 474 ist von einem Dichtungskranz 481 umgeben. In diesem Dichtungskranz ist eine Durchlaßöffnung 482 ausgebildet, die in der in Fig. 7 dargestellten Stellung des Rohres 474 die Ablaufkammer 407 mit der Absaugleitung 415 verbindet. In der in der Fig. 7 dargestellten Stellung des Rohres 474 liegt ferner der Dichtkranz 481 dichtend gegen ein durch die konische Wand des Milchsumpfes 414 gebildeten Ventilsitz 483 an.

Das obere Ende 485 des die Spülleitung bildenden Rohres 474 liegt etwa in Höhe des oberen Endes des Schlitzes 406. Das obere Ende könnte sich auch noch etwas weiter bis gegen das untere Ende des den Luftbypass bildenden Rohres 451 erstrecken, sollte jedoch in der in der Fig.7 dargestellten Spülstellung nicht wesentlich unter dem oberen Ende des Schlitzes 406 enden.

Die Wirkungsweise der Reinigungsvorrichtung ist derart, daß im der in der Fig. 7 dargestellten Spülstellung die Spülflüssigkeit über die Zuführleitung 402, den Innenraum des Zyklons 445, die Vorkammer 446 ?, die ringförmige Öffnung 471 in die Meßkammer 404 eintritt und von dort über den Meßschlitz 406 in die Ablaufkammer 407 gelangt. Da die Ablaufkammer 407 praktisch durch den auf dem Ventilsitz 483 aufsitzenden Dichtungsrand 481 abgeschlossen ist, kann die Spülflüssigkeit erst dann über das die Spülleitung bildende Rohr 474 in die Absaugleitung 415 gelangen, wenn der Flüssigkeitsstand in der Ablaufkammer 407 bis zum oberen Ende 485 des Rohres 474 angestiegen ist. Da ferner durch die Abdeckhaube 479 das obere Ende des Luftbypasses 451 verschlossen ist, kann keine Luft unmittelbar über diesen Luftbypass in die Ablaufkammer 407 gelangen. Vielmehr muß die Luft mit der Spülflüssigkeit durch die Meßkammer fließen. Die Ablaufkammer 407 wird trotzdem am Ende des Spülvorganges vollständig von Spülflüssigkeit entleert, indem in dem Dichtkranz 481 die Durchlaßöffnung 482 vorgesehen ist.

Für den normalen Betrieb des Milchflußmessers wird der Kipphebel 478 um seinen Anlenkpunkt 477 an dem Gestänge 476 verschwenkt, wodurch das Gestänge gegen die Kraft der Feder 480 angehoben wird. Dadurch wird die Abdeckhaube 479 vom oberen Ende des den Luftbypass bildenden Rohres 451 abgehoben und gleichzeitig wird das Rohr 474 angehoben. Hierdurch wird der Dichtkranz 481 von dem Ventilsitz 483 abgehoben, so daß die Ablaufkammer 407 unmittelbar über den Milchsumpf 414 mit der Absaugleitung 415 in Verbindung steht. In dieser Stellung kann der Milchflußmesser seine Funktion ohne Beeinträchtigung ausführen.

## Patentansprüche

1. Milchflußmesser mit einer mit einer Milchzuführleitung in Verbindung stehenden Meßkammer (4), die über eine oder mehrere kalibrierte Milchabflußöffnungen (6) und gegebenenfalls einen zusätzlichen Luftbypass (9) mit einer an ihrem unteren Ende einen Milchsumpf bildenden Ablaufkammer (7) in Verbindung steht, und mit einer mit dem Milchsumpf (14) in Verbindung stehenden Milchabsaugleitung (15), **gekennzeichnet durch** eine mit ihrem einen Ende (18) im wesentlichen in Höhe des oberen Endes der Meßkammer (4) in die Ablaufkammer (7) und/oder Meßkammer (4) und mit ihrem anderen Ende (19) in den Milchsumpf (14) mündende Spülleitung (17), und durch eine die Milchabsaugleitung (15, 30) in einer Spülstellung im wesentlichen allein mit dem anderen Ende (19) der Spülleitung (17) verbindenden Verstelleinrichtung (20, 131, 52, 360, 490).

2. Milchflußmesser nach Anspruch 1, **dadurch gekennzeichnet,** daß die Verstelleinrichtung ein in der Spülstellung die Verbindung zwischen dem unteren Ende der Ablaufkammer (7) und der Milchabsaugleitung (15, 30) unterbrechendes Membranventil (360) umfaßt.

3. Milchflußmesser nach Anspruch 1, **dadurch gekennzeichnet,** daß die Verstelleinrichtung eine verstellbare Ventilkappe (20) umfaßt, die in der Spülstellung die Verbindung zwischen dem unteren Ende der Ablaufkammer (7) und der Milchabsaugleitung (15, 30) im wesentlichen unterbricht.

4. Milchflußmesser nach Anspruch 1, **dadurch gekennzeichnet,** daß die Verstelleinrichtung ein Drehventil (131) umfaßt, das in einer ersten Stellung eine Verbindung zwischen der Milchabsaugleitung (130) einerseits und dem unteren Ende der Ablaufkammer (107) und dem anderen Ende der Spülleitung (119) andererseits herstellt und in einer zweiten Spülstellung die Verbindung zwischen der Milchabsaugleitung (130) und dem unteren Ende der Ablaufkammer (107) im wesentlichen unterbricht.

5. Milchflußmesser nach einem der Ansprüche 1 bis 4, **dadurch gekennzeichnet,** daß in einer in den Milchsumpf (314) reichenden Trennwand (364) eine Öffnung (365) vorgesehen ist, die auch in der Spülstellung des Membranventils (360) bzw. der Ventilkappe (20) bzw. des Drehventils (131) eine Verbindung zwischen dem unteren Ende der Ablaufkammer (7, 107, 307) und der Absaugleitung (50, 130, 330) bildet.

6. Milchflußmesser nach einem der Ansprüche 3 bis 5, **dadurch gekennzeichnet,** daß in der Ventilkappe (20) bzw. dem Drehventil (131) wenigstens eine Öffnung (136) vorgesehen ist, über die die Absaugleitung (15, 130) in der Spülstellung des Ventils mit dem Milchsumpf (14, 114) und dem unteren Ende der Ablaufkammer (7, 107) in Verbindung steht.

7. Milchflußmesser nach einem der vorhergehenden Ansprüche, **dadurch gekennzeichnet,** daß daß das eine Ende der Spülleitung (142) wenigstens teilweise in der Oberseite (108) der Meßkammer (104) mündet.

8. Milchflußmesser nach Anspruch 7, **dadurch gekennzeichnet,** daß wenigstens der in die Oberseite (108) der Meßkammer (104) mündende Teil der Spülleitung (117) über ein Rückschlagventil (143) verschließbar ist.

9. Milchflußmesser nach Anspruch 1, **dadurch gekennzeichnet,** daß die Ablaufkammer (407), der Milchsumpf (414) und die Absaugleitung (415) in der Höhe übereinander angeordnet sind, daß die Verstelleinrichtung (490), die in Form eines an seinen Enden offenen und in der Höhe verstellbaren Rohres (474) ausgebildete Spülleitung umfaßt, und daß das Rohr (474) an seinem unteren Ende einen Dichtungskranz (481) aufweist, der in der abgesenkten Spülstellung des Rohres (474) dichtend auf einem um die Absaugleitung (415) herum ausgebildeten Ventilsitz (483) aufsitzt.

10. Milchflußmesser nach Anspruch 9, **dadurch gekennzeichnet,** daß in dem Dichtüngskranz (481) wenigstens ein Durchlaß (482) ausgebildet ist, der in der Spülstellung die Ablaufkammer (407) über den Milchsumpf (414) mit der Absaugleitung (415) verbindet.

11. Milchflußmesser nach einem der Ansprüche 1 bis 10, **dadurch gekennzeichnet,** daß die Milchzuführleitung (202, 302) über einen Zyklon (245, 345) und eine durch das untere Ende (248, 348) eines Trennschotts (247, 347) begrenzte Öffnung (249, 349) mit der Meßkammer (204, 304) in Verbindung steht, daß der Zyklon über einen weiteren Luftbypass (251, 351) mit dem Milchsumpf (214, 314) in Verbindung steht, und daß das in den Milchsumpf reichende Ende (259, 359) des weiteren Luftbypasses (251, 351) um eine vorbestimmte Höhendifferenz (H) niedriger liegt als der höchstliegende Teil des unteren Endes (248, 348) des Trennschotts (247, 347).

12. Milchflußmesser nach Anspruch 11, **dadurch gekennzeichnet,** daß in dem weiteren Luftbypass (351) eine verstellbare Drossel (365) oder ein verschließbares Ventil vorgesehen ist.

13. Milchflußmesser nach Anspruch 12, **dadurch** **gekennzeichnet,** daß die verstellbare Drossel (365) durch einen im Durchlaßquerschnitt pneumatisch vestellbaren eleastischen Membranstrumpf gebildet wird.

14. Milchflußmesser nach Anspurch 11, **dadurch gekennzeichnet,** daß die Spülleitung (217, 317) einen wesentlich größeren Querschnitt als der weitere Luftbypass (251, 351) aufweist.

15. Milchflußmesser nach einem der Ansprüche 11 bis 14, **dadurch gekennzeichnet,** daß der weitere Luftbypass (451) über die Ablaufkammer (407) mit dem Milchsumpf (414) und der Absaugleitung (415) in Verbindung steht.

16. Milchflußmesser nach Anspruch 15, **dadurch gekennzeichnet,** daß die Verstelleinrichtung (490) einen verstellbaren Verschluß (479) umfaßt, mit dem das in den Zyklon (445) mündende Ende des weiteren Luftbypasses (451) in der Spülstellung verschließbar ist.

## Claims

1. Milk flowmeter with a measuring chamber (4) communicating with a milk feed pipe and communicating via one or more calibrated milk outlet openings (6) and possibly an additional air by-pass (9) with a discharge chamber (7) forming a milk sump at its lower end, and with a milk extraction pipe (15) communicating with the milk sump (14), characterized by a flushing pipe (17) with one end (18) opening into the discharge chamber (7) and/or measuring chamber (4) essentially level with the upper end of the measuring chamber (4) and with its other end (19) opening into the milk sump (14), and by a setting device (20, 131, 52, 360, 490) which in a flushing setting connects the milk extraction pipe (15, 30) essentially exclusively with the other end (19) of the flushing pipe (17).

2. Milk flowmeter according to Claim 1, characterized in that the setting device comprises a diaphragm valve (360) which in the flushing setting interrupts the connection between the lower end of the discharge chamber (7) and the milk extraction pipe (15, 30).

3. Milk flowmeter according to Claim 1, characterized in that the setting device comprises a displaceable valve cap (20) which in the flushing setting substantially interrupts the connection between the lower end of the discharge chamber (7) and the milk extraction pipe (15, 30).

4. Milk flowmeter according to Claim 1, characterized in that the setting device comprises a turning valve (131) which in a first setting establishes a connection between the milk extraction pipe (130) on the one hand and the lower end of the discharge chamber (107) and the other end of the flushing pipe (119) on the other hand and in a second, flushing setting substantially interrupts the connection between the milk extraction pipe (130) and the lower end of the discharge chamber (107).

5. Milk flowmeter according to one of Claims 1 to 4, characterized in that a partition wall (364) extending into the milk sump (314) is provided with an opening (365) which, even in the flushing setting of the diaphragm valve (360) or valve cap (20) or turning valve (131) as the case may be, provides a connection between the lower end of the discharge chamber (7, 107, 307) and the extraction pipe (50, 130, 330).

6. Milk flowmeter according to one of Claims 3 to 5, characterized in that the valve cap (20) or turning valve (131) as the case may be is provided with at least one opening (136) by which the extraction pipe (15, 130) is in communication with the milk sump (14, 114) and the lower end of the discharge chamber (7, 107) in the flushing setting of the valve.

7. Milk flowmeter according to one of the preceding claims, characterized in that one end of the flushing pipe (142) opens at least partially at the top (108) of the measuring chamber (104).

8. Milk flowmeter according to Claim 7, characterized in that at least the part of the flushing pipe (117) opening into the top (108) of the measuring chamber (104) can be shut off by a check valve (143).

9. Milk flowmeter according to Claim 1, characterized in that the discharge chamber (407), milk sump (414) and extraction pipe (415) are superimposed; in that the setting device (490) has a flushing pipe in the form of an open-ended and vertically displaceable tube (474); and in that the tube (474) is provided at its lower end with a sealing rim (481) which seats in a sealed manner on a valve-seat (483) formed around the extraction pipe (415) when the tube (474) is in the lowered, flushing position.

10. Milk flowmeter according to Claim 9, characterized in that at least one passageway (482) is formed in the sealing rim (481) to connect the discharge chamber (407) with the extraction pipe (415) via the milk sump (414) in the flushing setting.

11. Milk flowmeter according to one of Claims 1 to 10, characterized in that the milk feed pipe (202, 302) is in communication with the measuring chamber (204, 304) via a cyclone (245, 345) and an opening (249, 349) bounded by the lower end (248, 348) of a partition (247, 347); in that an additional air by-pass (251, 351) connects the cyclone to the milk sump (214, 314); and in that the end (259, 359) of the additional air by-pass (251, 351) which reaches into the milk sump is lower, by a predetermined height difference (H), than the highest part of the lower end (248, 348) of the partition (247, 347).

12. Milk flowmeter according to Claim 11, characterized in that an adjustable choke (365) or closable valve is provided in the additional air by-pass (351).

13. Milk flowmeter according to Claim 12, characterized in that the adjustable choke (365) is constituted by an elastic diaphragm stocking whose effective cross-section is pneumatically adjustable.

14. Milk flowmeter according to Claim 11, characterized in that the flushing pipe (217, 317) has a substantially larger cross-section than the additional air by-pass (251, 351).

15. Milk flowmeter according to one of Claims 11 to 14, characterized in that the additional air by-pass (451) communicates via the discharge chamber (407) with the milk sump (414) and the extraction pipe (415).

16. Milk flowmeter according to Claim 15, characterized in that the setting device (490) comprises a displaceable closure element (479) whereby the end of the additional air by-pass (451) which opens into the cyclone (445) can be closed in the flushing setting.

## Revendications

1. Débitmètre pour lait, comportant une chambre de mesure (4) qui est en liaison avec une conduite d'arrivée du lait et qui, par l'intermédiaire d'une ou plusieurs ouvertures calibrées (6) d'écoulement du lait et éventuellement d'un bypass supplémentaire (9) pour l'air, est en liaison avec une chambre de départ (7) qui, à son extrémité inférieure, forme un puisard à lait, et comportant aussi une conduite (15) d'aspiration du lait en liaison avec le puisard à lait (14), caractérisé par une conduite de rinçage (17) qui, par l'une de ses extrémités (18), débouche sensiblement à hauteur de l'extrémité supérieure de la chambre de mesure (4) dans la chambre de départ (7) et/ou dans la chambre de mesure (4) et, par son autre extrémité (19), débouche dans le puisard à lait (14), et par un dispositif de réglage (20, 131, 52, 360, 490) qui, dans une position de rinçage, relie la conduite d'aspiration du lait (15, 30) sensiblement uniquement avec l'autre extrémité (19) de la conduite de rinçage (17).

2. Débitmètre pour lait selon la revendication 1, caractérisé par le fait que le dispositif de réglage comporte une soupape à membrane (360) qui, dans la position de rinçage, interrompt la liaison entre l'extrémité inférieure de la chambre de départ (7) et la conduite (15, 30) d'aspiration du lait.

3. Débitmétre pour lait selon la revendication (1), caractérisé par le fait que le dispositif de réglage comporte une soupape cylindrique réglable (20) qui, dans la position de rinçage, interrompt sensiblement la liaison entre l'extrémité inférieure de la chambre de départ (7) et la conduite (15, 30) d'aspiration du lait.

4. Débitmètre pour lait selon la revendication 1, caractérisé par le fait que le dispositif de réglage comporte un robinet à papillon (131) qui, dans une première position, réalise une liaison entre la conduite (130) d'aspiration du lait d'une part et l'extrémité inférieure de la chambre de départ (107) et l'autre extrémité de la conduite de rinçage (119) d'autre part et, dans une seconde position de rinçage, interrompt sensiblement la liaison entre la conduite (130) d'aspiration du lait et l'extrémité inférieure de la chambre de départ (107).

5. Débitmètre pour lait selon l'une des revendications 1 à 4, caractérisé par le fait que dans une paroi (364) qui arrive dans le puisard à lait (314) est prévue une ouverture (365) qui, même dans la position de rinçage de la soupape à membrane (360) ou de la soupape cylindrique (20) ou du robinet à papillon (131), forme une liaison entre l'extrémité inférieure de la chambre de départ (7, 107, 307) et la conduite d'aspiration (50, 130, 330).

6. Débitmètre pour lait selon l'une des revendications 3 à 5, caractérisé par le fait que dans la soupape cylindrique (20) ou dans le robinet à papillon (131) est prévue au moins une ouverture (136) par l'intermédiaire de laquelle, dans la position de rinçage de la soupape ou du robinet, la conduite d'aspiration (15, 130̸) est en liaison avec le puisard à lait (14, 114) et avec l'autre extrémité de la chambre de départ (7, 107).

7. Débitmètre pour lait selon l'une des revendications précédentes, caractérisé par le fait que l'une des extrémités de la conduite de rinçage (142) débouche au moins partiellement dans la face supérieure (108) de la chambre de mesure (104).

8. Débitmètre pour lait selon la revendication 7, caractérisé par le fait qu'au moins la partie de la conduite de rinçage (117) qui débouche dans la face supérieure (10̸8) de la chambre de mesure (104) peut être obturée au moyen d'un clapet de non-retour(143).

9. Débitmètre pour lait selon la revendication 1, caractérisé par le fait que la chambre de départ (407) le puisard à lait (414) et la conduite d'aspiration (415) sont disposés l'un au-dessus de l'autre en hauteur, que le dispositif de réglage (490) comporte la conduite de rinçage, qui a la forme d'un tube (474) ouvert à ses extrémités et réglable en hauteur, et que le tube (474) présente, à son extrémité inférieure, un boudin d'étanchéité (481) qui, dans la position basse, de rinçage, du tube (474), est assis de façon étanche sur un siège de soupape (483) formé autour de la conduite d'aspiration (415).

10. Débitmètre pour lait selon la revendication 9, caractérisé par le fait que dans le boudin d'étanchéité (481) est prévu au moins un passage (482) qui, dans la position de rinçage, relie la chambre de départ (407) avec la conduite d'aspiration (415) en passant par le puisard à lait (414).

11. Débitmètre pour lait selon l'une des revendications 1 à 10, caractérisé par le fait que la conduite (202, 302) d'arrivée du lait est en liaison avec la chambre de mesure (204, 304) par l'intermédiaire d'un cyclone (245, 345) et d'une ouverture (249, 349) limitée par l'extrémité inférieure (248, 348) d'une cloison (247, 347), que le cyclone est en liaison avec le puisard à lait (214, 314) par l'intermédiaire d'un autre bypass pour l'air (251, 351) et que l'extrémité (259, 359) de l'autre bypass pour l'air (251, 351) qui arrive dans le puisard à lait se trouve en dessous, d'une différence de niveau (H) prédéterminée, de la portion la plus haute de l'extrémité inférieure (248, 348) de la cloison (247, 347).

12. Débitmètre pour lait selon la revendication 11, caractérisé par le fait que dans l'autre bypass pour l'air (351) est prévu un étranglement réglable (365) ou une vanne obturable.

13. Débitmètre pour lait selon la revendication 12, caractérisé par le fait que l'étranglement réglable (365) est formé par un manchon à membrane élastique de section de passage réglable pneumatiquement.

14. Débitmètre pour lait selon la revendication 11, caractérisé par le fait que la conduite de rinçage (217, 317) présente une section sensiblement supérieure à celle de l'autre bypass pour l'air (251, 351).

15. Débitmètre pour lait selon l'une des revendications 11 à 14, caractérisé par le fait que l'autre bypass pour l'air (451) est en liaison avec le puisard à lait (414) et avec la conduite d'aspiration (415) par l'intermédiaire de la chambre de départ (407).

16. Débitmètre pour lait selon la revendication 15, caractérisé par le fait que le dispositif de réglage (490) comporte un obturateur réglable (479) avec lequel, en position de rinçage, on peut obturer l'extrémité de l'autre bypass pour l'air (451) qui débouche dans le cyclone (445).
